(19) Europäisches Patentamt
European Patent Office
Office européen des brevets

(11) **EP 2 333 022 B1**

(12) **EUROPEAN PATENT SPECIFICATION**

(45) Date of publication and mention
of the grant of the patent:
**27.06.2012 Bulletin 2012/26**

(51) Int Cl.:
*C09D 5/00* (2006.01)     *C09D 5/02* (2006.01)
*C09D 133/06* (2006.01)

(21) Application number: **10192523.8**

(22) Date of filing: **25.11.2010**

(54) **High PVC fast-drying aqueous binder compositions with small particle binders and traffic markings made therewith**

Schnelltrocknende wässrige Binderzusammensetzungen mit hohem PVK mit Kleinpartikelbindemittel und damit erzeugte Straßenmarkierungen

Compositions aqueuses à haute CPV à séchage rapide dotées de liants de petites particules et marquages routiers fabriqués avec celles-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 US 283960 P**

(43) Date of publication of application:
**15.06.2011 Bulletin 2011/24**

(73) Proprietor: **Rohm and Haas Company**
**Philadelphia,**
**Pennsylvania 19106-2399 (US)**

(72) Inventors:
• **Hermes, Ann Robertson**
**Ambler, PA 19002 (US)**

• **Matthews, Mary Anne R.**
**Willow Grove, PA 19090 (US)**
• **Kosto, Kim B**
**Maple Glen, PA 19002 (US)**
• **Schall, Donald C.**
**Lansdale, PA 19448 (US)**

(74) Representative: **Buckley, Guy Julian**
**Patent Outsourcing Limited**
**1 King Street**
**Bakewell**
**Derbyshire DE45 1DZ (GB)**

(56) References cited:
**US-A- 5 804 627          US-A- 5 939 514**
**US-A1- 2003 078 338      US-A1- 2007 148 357**

**Description**

The present invention relates to fast dry binder compositions for traffic markings that comprise emulsion polymer binders having a weight average particle size of 165 nm or less wherein the binder has a percent pigment volume concentration (%PVC) of 63 or higher. More particularly, it relates to binders comprising one or more anionically stabilized emulsion polymer having a weight average particle size of 165 nm or less, one or more polyamine, one or more volatile base and one or more filler, extender and/or pigment in a composition %PVC of from 63 to 80.

The expense of using a traffic paint binder consists of the cost of the traffic paint, the labor necessary to apply the traffic paint to form a traffic marking, and time needed to dry the marking for use. Until the traffic marking is formed, one has to keep the painted or marked surface closed to traffic.

Known traffic paint polymer binders enable a good balance of fast dry time and good paint stability in a conventional traffic marking composition (traffic paint) having a below critical PVC of from 45 to 60. Further, up to a point, reducing the particle size of a latex binder is known to improve its capacity to bind pigment. However, known binders for traffic paints have not thus far provided stable traffic paint binder compositions at above critical %PVC (cPVC), i.e. low binder concentration such that the binder no longer fully coats or continuously binds the non-binder component of fillers, pigments &etc and the resulting coating contains air voids.

U.S. patent publication 2007/0148357, to Joecken et al. (Joecken), discloses fast hardening aqueous traffic paint binder compositions comprising latex binder polymers having a glass transition temperature of less than 45°C and an average particle size of 160 to 240 nm, wherein the composition comprises at least two coalescing solvents one having a specified minimum evaporation rate and the other having a specified water solubility. Joecken discloses examples of compositions wherein the PVC is from 55 to 60. Accordingly, the Joecken traffic paint compositions have narrow formulation requirements do not enable improved performance at a reduced cost in use.

Document US 5 804 627 discloses a fast-drying coating composition comprising an anionically stabilized emulsion polymer, a polyfunctional amine. A volatile base sufficient to raise the pH of the composition to a point where essentially all of the polyfunctional amine is in a non-ionic state, is added in order to make the preparation more stable to storage. Fillers, extenders, pigments may be used in the composition, the pigment typically being used in the range of 50-60 percent pigment volume content.

Accordingly, the present inventors have sought to solve the problem of providing a stable quick setting traffic paint binder composition which dries quickly and makes a durable traffic marking, while at the same time reducing the cost in use to the applicator.

## SUMMARY OF THE INVENTION

In accordance with the present invention, fast dry binder compositions for traffic markings comprise one or more anionically stabilized emulsion polymer having a weight average particle size of 165 nanometers (nm) or less, one or more polyamine polymer, one or more volatile base and one or more filler, extender and/or pigment, wherein the binder compositions have a percent pigment volume concentration (%PVC) of 63 or higher, or up to 80, preferably, 65 or higher, or, preferably, 75 or lower. In the binder compositions, the anionically stabilized emulsion polymer may have a weight average particle size of 100 nm or higher, preferably, 110 nm or higher, or, preferably, 160nm or lower.

In one embodiment, the fast dry binder composition of the present invention is an above critical %PVC (cPVC) binder composition.

In another embodiment, the anionically stabilized emulsion polymer may comprise the polymerization product of a nonionic ethylenically unsaturated monomer with from 0.1 to 10 wt.%, based on the total weight of monomers polymerized, an acid functional ethylenically unsaturated monomer. The acid function ethylenically unsaturated monomer may be chosen from (di)carboxylic acid monomers, carboxylic anhydride monomers, phosphorus containing acid monomers, sulfur containing acid monomers, and mixtures thereof.

In yet another embodiment, the one or more polyamine polymer may be any of a polyfunctional amine polymer, such as a polyimine, an amine post functionalized emulsion polymer, a polyamine functional emulsion polymer with pendant amine-functional groups, and an emulsion polymer with pendant strong cationic groups and weak acid groups. The polyamine may comprise an emulsion polymer which contains both acid and amine groups, in which case no separate polyfunctional amine is needed in the binder composition.

In yet still another embodiment, the pigment, filler or extender may be chosen from an extender, preferably calcium carbonate, silica, silicates, combinations thereof, and any combination thereof with a pigment.

The present invention also provides methods of making traffic markings or other coated substrates comprising applying the fast dry binder composition of the present invention to a road, paved or concrete surface, or to a building surface, and allowing it to dry.

In addition, the present invention provides coated substrates, i.e. traffic markings and exterior insulation and finishing systems (EIFS) made with the fast dry binder composition of the present invention and according to the methods of the present invention.

All ranges recited are inclusive and combinable. For example, average particle sizes that range 100 nanometers (nm) or more, or 165 nm or less, preferably, 160 nm or less, or, preferably, 110 nm or more, or, more preferably, 115 nm or more or, more preferably, 155 nm or less would include average particle sizes of from 100 nm to 165 nm, or of from 100 to 160 nm, or of from 100 nm to 155 nm, or of from 100 nm to 115 nm, or of from 100 nm to 110 nm, or of from 110 nm to 165 nm, or of from 110 nm to 160 nm, or of from 110 nm to 155 nm, or of from 110 nm to 115 nm, or of from 115 nm to 165 nm, or of from 115 nm to 160 nm, or of from 115 nm to 155 nm.

Unless otherwise indicated, all temperature and pressure units are room temperature and standard pressure (STP).

All phrases comprising parentheses denote either or both of the included parenthetical matter and its absence. For example, the phrase "(meth)acrylate" includes, in the alternative, acrylate and methacrylate.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight as measured by gel permeation chromatography (GPC) against a poly(methylmethacrylate) or poly(styrene) standard for an anionically stabilized emulsion polymer and against a poly(acrylic acid) for a polyamine.

As used herein, the term "pigment volume concentration" or %PVC refers to the quantity calculated by the following formula:

$$PVC\ (\%)\ =\ \frac{(\text{volume of pigment(s) + volume extender(s) + volume of filler(s))}}{\text{Total dry volume of paint.}} \times 100$$

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, the term "polymer solids or pigment solids" means polymer or pigment in its dry state.

As used herein, the term "road" includes any indoor or outdoor solid surface that is or may be constantly or intermittently traveled on by pedestrians, moving vehicles, tractors, or aircraft continuously. Some non-limiting examples of a "road" include highways, streets, driveways, sidewalks, runways, taxiing areas, tarmac areas, and parking lots.

As used herein, unless otherwise indicated, the term "calculated Tg" or "glass transition temperature" refers to the Tg of a polymer calculated by using the Fox equation (T. G. Fox, Bull. Am. Physics Soc., Volume 1, Issue No. 3, page 123 (1956).

As used herein, the phrase "wt.%" stands for weight percent.

As used herein, unless otherwise indicated, the term "weight average particle size" means the particle size as determined by light scattering (LS) using a Brookhaven 90 Plus particle size analyzer, Brookhaven Instruments Corp. (Holtsville, NY).

The present inventors have found that reducing the particle size of an anionically stabilized emulsion polymer binder composition while at the same time increasing the pigment, filler and extender loading of the composition, even above critical PVC (cPVC), results in faster dry time, crisp marking edges when applied by spraying, good traffic marking durability and, most surprisingly, good paint stability. Thus, an above cPVC or a high %PVC, i.e. 63 or greater, composition having one or more anionically stabilized emulsion polymer binder with a weight average particle size of 165 nm or less, and further comprising one or more polyamine and one or more volatile base provides quick-set traffic binders with shorter dry times when compared to the same composition without the combination of small particle size and high pigment, filler and/or extender loading. At the same time, the present invention enables the use of less emulsion polymer without sacrificing the stability of the binder composition or durability performance.

The fast dry binder compositions of the present invention most preferably have a %PVC of 67 or higher, or 75 or less. Useful emulsion polymer binder solids proportions are 10wt.% or more, or up to 23wt.%, or, preferably, 13wt.% or more, or, preferably, up to 20wt.%, and, most preferably, 13wt.% or more, or, most preferably, up to 18wt.%, all wt. %s based on the total weight solids of binder, filler, extender and pigment.

The binder compositions are dispersed in an aqueous evaporable carrier. The aqueous evaporable carrier includes water or water having dissolved therein a low VOC water miscible organic solvent, such as methanol, ethanol and glycol ether. Water is preferred.

The anionically stabilized emulsion polymer used in the binder compositions of the present invention most preferably has a weight average particle size of 155 nm or less, or 115 nm or more.

The choice of the anionically stabilized emulsion polymer is not critical. A suitable anionically stabilized emulsion polymer may be polymerized from one or more nonionic ethylenically unsaturated monomer, such as, for example, (meth)acrylic ester monomers including $C_1$ to $C_{18}$ alkyl (meth)acrylates, such as methyl (meth)acrylate, ethyl (meth) acrylate, butyl (meth)acrylate, 2-ethylhexyl (meth)acrylate; hydroxyethyl (meth)acrylate; acid functional monomers, such as (meth)acrylic acid, crotonic acid, itaconic acid, fumaric acid and maleic acid; monomethyl itaconate; monomethyl fumarate; monobutyl fumarate; maleic anhydride; acrylamide or substituted acrylamides; diacetone acrylamide; glycidyl methacrylate; acetoacetoxyl ethyl methacrylate (AAEM); (meth)acrolein; isocyanatoalkyl (meth)acrylates; styrene or substituted styrenes; butadiene; ethylene; vinyl acetate or other vinyl esters; vinyl monomers, such as, vinyl halide; amine functional monomers, such as, for example, N,N'-dimethylamino (meth)acrylate; and (meth)acrylonitrile.

Preferably, to insure film formation in use without requiring excessive amounts of coalescing solvents, the anionically stabilized binder polymer may be provided with a Tg in the range of from -10 °C to 60 °C.

The negative charge on the anionically stabilized emulsion polymer particles can be obtained in any of several ways. Anionically stabilized emulsion polymers may contain functional groups that are anionic when deprotonated, may be stabilized by anionic surfactants during or after polymerization, or any combination of two or these can be used. Suitable functional groups that are anionic when deprotonated may include, for example, carboxylic acids, anhydrides, and aldehydes. Suitable surfactants for stabilizing anionically stabilized emulsion polymers may include, for example, anionic surfactants, non-ionic surfactants, or mixtures of anionic and non-ionic surfactants.

Suitable anionically stabilized emulsion polymers may contain, as polymerized functional groups that are anionic when deprotonated, up to 10 wt.%, for example, up to 7.5 wt.%, and, preferably, 0.1 wt.% or more, or, preferably, up to 5.0 wt.%, of one or more (di)acid monomer, for example, carboxylic acid, carboxylic anhydride, phosphate, sulfate, sulfonate group containing monomer.

Alternatively, the anionically stabilized emulsion polymer can contain, as polymerized units, up to 10 wt.%, for example, up to 7.5 wt.%, and, preferably, 0.1 wt.% or more, or, preferably, up to 5.0 wt.% of amine-functional monomers. Such polymers may include, for example, polyamine functional emulsion polymers with pendant amine-functional groups or polyamine functional emulsion polymers with pendant strong cationic groups, such as quaternary amine groups.

In one embodiment, the anionically stabilized emulsion polymer can contain both amine functional groups and acid-functional groups, or it can be a blend of one or more emulsion polymer containing having one kind of functional group with one or more emulsion polymer having the other kind of functional group.

Preferably, the anionically stabilized emulsion polymer is formed from monomers chosen from butyl acrylate, ethyl acrylate, ethyl hexyl (meth)acrylate, methyl methacrylate, styrene, styrene-butadiene, (di)acid monomer, amine-group containing monomer, and mixtures thereof. More preferably, the anionically stabilized emulsion polymer comprises, as polymerized units, two or more ethylenically unsaturated monomers, wherein from 0 to 5 wt.% of the monomers are $\alpha,\beta$-ethylenically unsaturated aliphatic carboxylic acid monomers.

The polymerization techniques used for preparing the anionically stabilized binder polymer of the present invention are well known in the art. The binder polymer may be prepared by aqueous emulsion polymerization. Thermal, redox, photochemical, and electrochemical initiation processes may be used.

The diameter of the polymer particles may be controlled in one or more of several known ways. The amount of conventional surfactants or emulsifiers added during the emulsion polymerization process may be increased, the rate of shear during polymerization may be increased, and the metal ion or salt content present during and after polymerization may be lowered. The use of a preformed polymer seed may also be used assuming the particle size of the seed is small enough to grow out to the proper final particle size.

Conventional surfactants may be used in polymerization, including, anionic emulsifiers, such as alkali or ammonium alkyl sulfates and oxyethylated alkyl phenol sulfates, nonionic emulsifiers, such as polyoxyethylenated alkyl alcohols, amine polyglycol condensates and alkylpolyether alcohols; or their combination. Typical ranges for surfactants are between 0.05 to 8 percent by weight based on total weight of total monomer.

Any monomer in any polymerization may be added as an emulsion in water or neat, i.e. not as an emulsion in water. The monomer may be added in one or more additions or continuously, linearly or not, over the reaction period, or combinations thereof.

Suitable free radical initiators or oxidants may include, for example, persulfates, such as, for example, ammonium and/or alkali metal persulfates; peroxides, such as, for example, sodium or potassium hydroperoxide, t-alkyl peroxides, t-alkyl hydroperoxides, dicumyl hydroperoxide; or t-alkyl peresters, wherein the t-alkylgroup includes at least 5 carbon atoms; perboric acids and their salts, such as, for example, sodium perborate; perphosphoric acids and salts thereof; potassium permanganate; and ammonium or alkali metal salts of peroxydisulfuric acid. Such initiators may be used in amounts ranging from 0.05 wt.% to 3.0 wt.%, based on the total weight of monomers.

Suitable redox catalysts may use the same free radical initiators coupled with a suitable reductant such as, for example, (iso)ascorbic acid, sodium sulfoxylate formaldehyde, sodium or alkali metal (bi)sulfite; thiosulfates, hydrosulfites; (hydro)sulfide or dithionite; formadinesulfinic acid; hydroxymethanesulfonic acid; sodium 2-hydroxy-2-sulfinatoacetic acid; and acetone bisulfite; and salts of thereof may be used in amounts of 0.01 wt.% to 5.0 wt.%, based on the total weight of monomers.

Chain transfer agent(s) may be added in one or more additions or continuously, linearly or not, over most or all of the entire reaction period or during limited portion(s) of the reaction period. Suitable chain transfer agents may include, for example, sulfur-containing compounds, such as alkylthiols, alkyl thioglycolates, alkyl mercaptoalkanoates, including tert-butyl mercaptoacetate, and $C_4$-$C_{22}$ linear or branched alkyl mercaptans; thioesters; and known halo-organic compounds.

Mercaptans are preferred. Suitable amounts of chain transfer agents range from 0.1 to 10 wt.%, based on the total weight of monomers.

So long as the desired particle size emulsion polymer results, the binder polymer may include multi-stage polymer particles having two or more phases of various geometric structures, such as, for example, core/shell or core/sheath particles, core/shell particles with shell phases incompletely encapsulating the core, core/shell particles with a multiplicity of cores and interpenetrating network particles. The multi-stage polymer particles are prepared by a conventional emulsion polymerization process in which at least two stages differing in composition are formed in a sequential fashion. The emulsion polymerization techniques used for preparing such multi-stage polymer particles are well known in the art and are disclosed, for example, in the U.S. Pat. Nos. 4,325,856, 4,654,397 and 4,814,373.

The choice of polyfunctional amine is not critical as long as it is a polyamine polymer. A suitable polyfunctional amine may include, for example, polyfunctional amine polymers having a weight average molecular weight of 1,000 or more formed from polymerization of an amine-group containing monomer and/or an imine monomer in amounts of, for example, from 20 to 100 wt.% of such a monomer, based on the total weight of polymerized units, and amine functional emulsion polymers, and amine post functionalized emulsion polymers.

In general, the polyfunctional amines may be obtained by known solution polymerization methods in aqueous media, either neutral, alkaline, or acidic, depending upon the particular polymer sought, for example, as taught in U. S. Pat. No. 4,119,600. Suitable polyamine polymers may comprise, as polymerized units, two or more ethylenically unsaturated monomers. The polyfunctional amines include copolymers with up to 80 percent by weight of one or more nonionic ethylenically unsaturated monomer, such as any used to form the anionically stabilized emulsion polymer binder, preferably more water soluble (meth)acrylamide and methyl acrylate . Small amounts of relatively insoluble comonomers may also be used to obtain the water-soluble polyfunctional amines. The particular comonomer or comonomers used in making the polyfunctional amines, depends upon the proportion of amine-containing monomer used in making the copolymer.

Examples of the amine containing monomers for making polyamine polymers include aminoalkyl vinyl ethers or sulfides; amine containing acrylamide or (meth)acrylic esters, such as dimethylaminoethyl (meth)acrylate; N-(meth) acryloxyalkyl-oxazolidines, such as poly(oxazolidinylethyl methacrylate), N-(meth)acryloxyalkyltetrahydro-1,3-oxazines, and monomers that readily generate amines by hydrolysis, as disclosed in U. S. Pat. No. 5,804,627. U.S. Pat. No. 5,672,379 discloses additional polyfunctional amines.

Polymers prepared using imine monomers contain no imine functionality and, instead, contain amine functionality as part of the polymer backbone.

Suitable polyfunctional amine polymers may include, for example, poly(oxazolidinylethyl methacrylate), poly (vinylamine), polyalkyleneimine, e.g. poly(ethyleneimine), and polymers containing pendant amine groups or strong cationic groups.

Polyamine functional emulsion polymers may be anionically stabilized emulsion polymers with pendant amine-functional groups. These may be anionically stabilized emulsion polymers that also have pendant acid-functional groups or they may be emulsion polymers blended with one or more anionically stabilized emulsion polymer that has acid-functional groups.

In another embodiment, the polyfunctional amines may be anionically stabilized emulsion polymers having pendant strong cationic groups (with a pKa of $\leq 3.0$) and weak acid groups, or polyfunctional amine emulsion polymers having pendant strong cationic groups may be blended with anionically stabilized emulsion polymers. Suitable polyamine functional polymers may be polyamine functional emulsion polymers formed from polymerizable cationic groups that may comprise, for example, quaternary ammonium moieties.

In yet another embodiment, the amine or cationic functional groups pendent to a polyfunctional amine emulsion polymer, whether anionically stabilized or not, may be introduced by post functionalizing the polymer with amines. An emulsion polymer polymerized from monomers containing 1, 3-dicarbonyl moieties, e.g. AAEM in the range of 0.5 wt. % to 20 wt.%, preferably up to 12 wt.%, can be reacted with polyamines which contain one and only one amine per molecule capable of reacting with 1,3-dicarbonyl compounds and at least one other amine which is incapable of reacting with 1,3-dicarbonyl compounds to form enamines all in weight percentages based on total weight of polymer solids. Alternatively, an emulsion polymer polymerized from in the range of from 0.5 to 20 wt.% preferably up to 12 wt.%, based on total weight of polymer solids, of monomers containing isocyanate moieties, e.g. isocyanatoethyl(meth)acrylate and preferably 3-isopropenyl-a,a-dimethylbenzyl isocyanate, can be reacted with polyfunctional amines that contain, per molecule, at least two primary and secondary amines in a ratio of isocyanate groups to polyfunctional amine molecules of from 5:1 to 1:5, preferably from 1:1 to 1:3.

Further, an emulsion polymer polymerized from in the range of from 0.5 to 20 wt.%, preferably up to 10 wt.%, based on total weight of polymer solids, of monomers containing epoxy moieties, such as glycidyl (meth)acrylate, can be reacted with any amines, including polyfunctional amines in a ratio of epoxy moieties to amine moieties of from 5:1 to 1:5, preferably from 1:1 to 1:3. Still further, an emulsion polymer containing from 0.5 to 20 wt.%, preferably up to 5 wt.%, based on total weight polymer solids, of carboxylic acid group containing monomers, can be reacted with aziridines, such as ethyleneimine, propyleneimine, or 1-(2-hydroxyethyl) ethyleneimine in a ratio of carboxylic acid moieties to aziridine moieties of from 10:1 1 to 1:1, preferably 2:1 to 1:1.

Suitable amounts of the polyfunctional amine may range from 0.1 to 10 wt.%, based on the total weight of the anionically stabilized emulsion polymer, , preferably 0.2 wt.% or more, or, preferably, 5.0 wt.% or less, and, more preferably, 0.5 wt.% or more or, more preferably, 2.0 wt.% or less. The polyfunctional amine may, alternatively, be present in the coating composition, or it may be added as a separate component before, during or after the dispersion composition is applied.

In the aqueous binder compositions, the type and amount of volatile base used is not critical so long as the base volatilizes in use conditions, e.g. under air drying conditions, and the amount is sufficient to raise the pH of the fast dry anionically stabilized emulsion polymer binder composition to the point where a desired proportion of the polyfunctional amine is in a non-ionic state (deprotonated) at all times prior to use. In the non-ionic state (i.e. deprotonated), polyfunctional amine interaction with the anionically stabilized emulsion and any other anionic ingredient which may be present in the composition is minimized. During film formation, the volatile base evaporates with the result that the amine moieties of the polyamine functional polymer become protonated to form ammonium moieties which, in turn, interact with the anionic ingredients to destabilize the coating composition and thereby accelerate drying. Suitably, from 20 to 100 mole % of the amino groups of the polyfunctional amines may be deprotonated, preferably from 60 to 100 mole %, more preferably from 80 to 100 mole %, and most preferably from 90 to 100 mole %. Accordingly, suitable pH ranges for fast-drying aqueous dispersions may range from 7.5 to 11, preferably 9 or higher, more preferably, from 9.5 to 10.7.

Suitable amounts of a volatile base may range from 0.2 to 5 wt.%, based on the total weight of the anionically stabilized emulsion polymer, and the polyfunctional amine. Suitable volatile bases may include any of ammonia, $C_1$-$C_6$ alkyl amines and $C_1$-$C_6$ alkanolamines, such as, for example, butylamine, propylamine, ethylamine, ethylenediamine, trimethyl amine, triethyl amine, diethylamine, diethanolamine, ethanolamine, 2-methylaminoethanol, 2-dimethylaminoethanol, morpholine, and N-methylmorpholine. Preferably, the volatile base is ammonia, or an admixture thereof with other volatile or nonvolatile bases.

The choice of fillers, extender and pigments is not critical. Suitable fillers or extenders may include, for example calcium carbonate, silicas, silicates, talcs, nepheline syenite, quartz(ite), glass or polymeric microspheres, cement, and sand. Preferred is calcium carbonate and silicates. Suitable pigments may include titanium dioxide, organic pigments, carbon black and iron oxides. Pigment amounts may range up to 10 wt.% of total binder solids.

Formulations may contain additional ingredients, such as, for example, thickeners, such as polyvinyl alcohol (PVA), hydroxyethyl cellulose (HEC), associative thickeners, such as, for example, hydrophobically-modified, alkali soluble emulsions (HASE), hydrophobically-modified ethylene oxide-urethane polymers (HEUR), and hydrophobically-modified hydroxy ethyl cellulose (HMHEC), alkali-soluble or alkali-swellable emulsions (ASE), other cellulosic thickeners, and attapulgite clay; rheology modifiers; colorants; plasticizers; crosslinking agents; adhesion promoters, such as silanes; tackifiers; coalescents, for example, 2,2,4-trimethyl-1,3-pentanediol monoisobutyrate, and glycol ethers; dispersants; wetting agents; dyes; sequestering agents; preservatives, biocides and mildewcides; anti-freeze agents; slip additives; waxes; freeze/thaw protectors; defoamers; corrosion inhibitors; and anti-flocculants. HEC is the preferred thickener.

Suitable dispersants may include one or more non-ionic, or anionic dispersants, such as, for example, carboxylic acids, and anionic polymers such as homopolymers and copolymers based on polycarboxylic acids, including those that have been hydrophobically- or hydrophilically-modified, e.g. poly(meth)acrylic acid with various comonomers such as styrene, or alkyl(aryl) (meth)acrylate esters.

One or more surfactant may be used to stabilize the emulsion polymerization systems after polymerization of monomers and may be present at levels of from 0.1 to 8 wt.% based on the total weight of monomer in polymerization. Suitable surfactants include cationic, anionic, and non-ionic surfactants.

Care must be exercised when selecting the type and amount of additives to avoid altering the pH of the composition to an extent that interferes with storage stability or buffering the pH to an extent that after application the pH does not fall sufficiently to initiate protonation of the polyamine. Traffic paint compositions typically have a solids content in the range of from 35 to 70% by volume and a viscosity of from 70 Kreb units (KU) to 100 KU.

The polymer binder compositions may be used in traffic paints, EIFS systems, and migration resistant binders for non-wovens. The polymer binder compositions may also be used in architectural and industrial coatings where fast dry time is required. Various applications methods are known in the art, including spraying the composition on the road surface using pressurized spray guns, such as, for example truck mounted spray guns supplied with paint via air pressurized tanks or airless pumps. Other methods include applying the composition by hand using a paint brush or a paint roller. Coatings may be applied in one or more layer. Preferably, the substrate is cleaned prior to application to remove any dirt or sediments. Whether it comprises one layer or more than one layer, a suitable thickness of the dried film generally ranges from 100 $\mu$m to 1500 $\mu$m, preferably 200 $\mu$m or more, and, preferably, up to 600 $\mu$m.

The compositions are suitable for coating or forming films on substrates such, as, for example, roads, and traffic control devices such as guardrails and concrete barriers, roof tops, walls, for example, in exterior insulation finishing systems (EIFS), walkways, runways, parking areas, and indoor floors (such as in factories or shopping malls). Typical substrates include, for example, masonry, tar, asphalt, resin, concrete, cement, stone, stucco, tile, polymeric materials, metals, such as aluminum, stainless steel, or carbon steel, and combinations thereof. All of the substrates may already have one or more layers of an existing coating or paint which may be fresh or aged.

For use in traffic paints, to improve the visibility of the roadway markings, the methods of the present invention may further include applying glass beads on the layer of the traffic paint or coating while the layer is still wet or by premixing them into the traffic paint prior to application. The glass beads may be applied by known methods, such as, for example, by spraying the glass beads entrained in and conveyed by a jet of air atop the traffic paint layer. The amount of glass beads applied on the coating layer may range from 250-600 g/m$^2$ of the coating layer for visibility at night. Suitable glass beads for roadway markings may have an average particle size ranging from 50 to 1500 $\mu$m.

In EIFS applications, the compositions are applied to a building substrate made of a glass fiber mesh reinforced polymer and cement base coat itself applied over an insulated sheathing board and an inner layer of foam insulation board secured to an exterior wall surface. The fast dry polymer binder compositions can be formulated and applied as a textured finish coat.

EXAMPLES:

The following examples illustrate the present invention.
In the examples, the following abbreviations are used: HEB is High Efficiency Binder Composition; BA is butyl acrylate; MMA is methyl methacrylate; MAA is methacrylic acid; KU are Kreb Units (viscosity measure); wt is weight; vol is volume; g is gram; aq is aqueous; sol is solution; %rh is percent relative humidity; and min is minute.

In the Examples, the formulation ingredients shown have the following compositions:

Comparative Binder or Fast-dry acrylic emulsion binder A: A 50 wt % solids mixture made as disclosed in Example 1 of US 5,939,514, having a pH of 9.9 made from 1.2 solids weight parts of a polyoxazolidinoethylmeth-acrylate, aqua ammonia, and 98.8 solids weight parts of a 45.6BA/53.1MMA/1.3MAA copolymer with a calculated Tg of 11.5 °C and, unless otherwise indicated, a weight average particle size of 180 nm.

High Efficiency Binder Composition A: A 47.3 weight % solids mixture, having a pH of 9.9 and 1.2 solids weight parts of a polyoxazolidinoethyl methacrylate, aqua ammonia, and 98.8 solids weight parts of a 45.6BA/53.1MMA/1.3MAA emulsion copolymer with a calculated Tg of 11.5 °C and a weight average particle size of 128 nm. Binder Composition A was made in the same way as the Fast-dry acrylic emulsion binder except that 1wt.%, based on emulsion polymer solids, fatty alcohol ether sulfate, sodium salt was used to stabilize the emulsion polymer. High Efficiency Binders 2 through 9 are all the same backbone composition as High Efficiency Binder Composition A made with varying emulsion polymer particle sizes, as shown in Table 1, below.

Table 1: High Efficiency Binders

| High Efficiency Binder No. | Weight Avg. Particle Size (nm) | % Polymer Solids |
|---|---|---|
| 2 | 161 | 47.94 |
| 3 | 147 | 47.95 |
| 4 | 138 | 49.42 |
| 5 | 129 | 47.6 |
| 6 | 128 | 47.2 |
| 7 | 127 | 47.8 |
| 8 | 108 | 47.95 |
| 9 | 127 | 49.8 |

Poly(oxazolidinylethyl methacrylate): An aqueous solution of poly (oxazolidinylethyl methacrylate) polymer was prepared according to the procedure shown in Example 5 of U.S. Patent No. 5,939,514 as a 27 wt.% aqueous solution.
Acrylic Dispersant: Ammonium salt of polymethacrylic acid (30 wt. % aq. solution).

SURFYNOL™ CT-136: A proprietary acetylenic surfactant blend from Air Products and Chemicals, Inc., Allentown, PA.
DREWPLUS™ L-493: Mineral oil based foam control agent from Drew Industrial division of Ashland, Inc, Boonton, NJ.
ANTAROL TS 709: Mineral oil based foam control agent from Lubrizol Advanced Materials, Cleveland, OH.
2,2,4 TMPMI: 2,2,4-trimethyl-1,3-pentanediol monoisobutyrate.
Titanium dioxide or $TiO_2$ pigment: A rutile pigment, contains 0 to 4.5% A1(OH)3.
Calcium carbonate: Natural ground with a 5.5 μm average particle size.
2-hydroxyethyl cellulose aqueous solution (2 wt.% solids). Viscosity type HR.
In the Examples that follow, the following test procedures were used:

Storage Stability: Binder compositions were tested in accordance with ASTM Standard Method D562 --01 (2005) using a Brookfield Krebs Unit Viscometer Model KU-2 (Paul N. Gardner Company, Inc., Pompano Beach, FL). Binder compositions were placed in sealed 0.5 liter containers and then tested after one day at 25 °C, and again after storing at 25 °C for 60 days or at 60 °C for 10 days To test after storage, the containers were allowed to equilibrate to 25 °C, if needed, and were opened, mixed for one minute by hand stirring, and immediately tested. The stored binder compositions were rated a "pass" if the binder composition consistency, as measured in Krebs units ( KU ), did not increase by more than 10 KU from the consistency measured after one day at 25 °C.

Dry-to-No-Pickup Time:
Tables 2, 3 and 4: Dry-to-No-Pickup Time, Method A: Binder compositions were applied over 10 cmx 30 cm glass test panels to a paint layer. The thickness of the layer was controlled to 400μm. The test panels were promptly placed in a test chamber supplied by Victor Associates, Inc., Hatboro, Pa. and maintained at a desired relative humidity of 85 % to 90 % via a pan at the bottom of the test chamber filled with 2 cm of water and allowing the test chamber to equilibrate overnight. The test chamber was equipped with a certified hygrometer and a certified temperature indicator, both of which were fastened to the center of the rear wall of the test chamber to ensure balanced measurement. After overnight equilibration with all ports and doors to the test chamber closed, the relative humidity within the test chamber reached 100%. By carefully opening and closing the various ports, the relative humidity within the chamber was then brought to the desired relative humidity. The door of the test chamber was opened briefly at 1 minute intervals to touch the wet paint films lightly with the tip of a clean finger. When the film was dry to a light touch, the panel was taken out of the test chamber and the dry-to-no-pickup time was determined in accordance with ASTM #D711 by rolling a traffic paint drying wheel over the wet film. The end point for the dry-to-no-pickup time is defined as the point in time where no paint adheres to the rubber rings of the test wheel. Dry-to-no-pickup time of less than 20 minutes is considered acceptable.
Tables 5 and 6: Dry-to-No-Pickup Time, Method B: Same as Method A, except the test chamber was opened at 4 minute intervals to touch the wet paint films..

Retroreflectance: Retroreflectance was evaluated at the end of test lines one month and 17 months after application according to ASTM D 4061-94 (2006) entitled "Test Method for Retroreflectance of Horizontal Coatings," and measured with a LTL2000 Retrometer (Flint Trading, Inc., Thomasville, NC.) Retroreflectance readings with values above 100 millicandelas per square meter per lux were considered acceptable. To make the test lines, Duplicate 380 μm thick layers of white binder compositions (described in Table 6) were spray applied across an entire lane of a concrete road surface, and in a direction perpendicular to the flow of traffic, by means of a walk behind, self-propelled striping machine (Linear Dynamics, Inc, Parsippany, N.J.) in accordance with ASTM D 713-90 (2004). Glass beads, conforming to AASHTO Designation M 247-81, American Association of State Highway and Transportation Officials, Washington, D.C (1993) and sold under the name Highway Safety Spheres with Adherence Coating AC-110 (Potters Industries, Inc., Carlstadt, N.J.) were immediately spray applied on each wet layer of the white binder compositions.

Traffic paint formulations were prepared with thickener added to attain a target viscosity of 82 to 88 Krebs Units and were tested in accordance with Tables 2 to 7, below.

TABLE 2: Traffic Paint Formulations

| Component (down) | EXAMPLE (across) | A (g) Comparative | 1 (g) Comparative | B (g) Comparative | 2 (g) |
|---|---|---|---|---|---|
| Fast-dry acrylic emulsion binder | | 32.70 | -- | 27.23 | -- |
| High Efficiency Binder Composition A | | -- | 34.57 | -- | 28.79 |
| Acrylic Dispersant | | 0.51 | 0.51 | 0.49 | 0.49 |
| SURFYNOL™ CT-136 | | 0.19 | 0.19 | 0.19 | 0.19 |
| ANTAROL TS 709 | | 0.39 | 0.39 | 0.37 | 0.37 |

(continued)

| Component (down) | EXAMPLE (across) | A (g) Comparative | 1 (g) Comparative | B (g) Comparative | 2 (g) |
|---|---|---|---|---|---|
| Water | | 0.00 | 0.00 | 0.00 | 0.00 |
| Titanium dioxide pigment | | 7.10 | 7.04 | 6.86 | 6.86 |
| Calcium carbonate | | 54.05 | 53.19 | 57.76 | 57.76 |
| **Mix for 15 minutes, then add** | | | | | |
| Methanol | | 2.13 | 2.13 | 2.06 | 2.06 |
| 2,2,4-trimethyl-1,3-pentanediol monoisobutyrate | | 1.63 | 1.63 | 1.36 | 1.36 |
| **Mix for 5 minutes, then add** | | | | | |
| 2-hydroxyethyl cellulose aqueous solution | | 0.82 | 1.12 | 0.59 | 0.60 |
| **Water** | | 0.48 | 0.00 | 3.07 | 1.50 |
| Total weight (g) | | 100.00 | 100.00 | 100.00 | 100.00 |
| **PAINT PROPERTIES** | | | | | |
| **Filler / binder solids ratio** | | 76.8 / 23.2 | 76.5 / 23.5 | 80.9 / 19.1 | 80.9 / 19.1 |
| **% PVC** . | | 60% | 60% | 66% | 66% |
| **Weight average particle size** | | 180 nm | 128 nm | 180 nm | 128 nm |
| **Storage Stability (KU): 1 day / 60 days each @ 25 °C** | | 88 / 87 | 88 / 94 | 85 / 85 | 85 / 85 |
| **No Pick-up Dry Time, Method A** | | 31 minutes | 13 minutes | 24 minutes | 10 minutes |

As shown in Table 2, above, the inventive fast dry binder compositions of Examples 1 and 2 with a 128 nm weight average particle size emulsion polymer dry considerably faster than the respective compositions of Comparatives A and B made at the same PVC and from substantially the same anionically stabilized emulsion polymer, and the same polyfunctional amine, and filler, but with a 180 nm weight average particle size emulsion polymer binder. In addition, as the PVC is increased stability is better in Example 2 relative to all of Example 1 and Comparatives A and B.

TABLE 3: 69% and 72% PVC Formulations

| Component (down) | EXAMPLE (across) | C (g) Comparative | 3 (g) | D (g) Comparative | 4 (g) |
|---|---|---|---|---|---|
| Fast-dry acrylic emulsion binder | | 24.42 | -- | 21.91 | -- |
| High Efficiency Binder Composition A | | -- | 25.82 | -- | 23.16 |
| Acrylic Dispersant | | 0.49 | 0.49 | 0.24 | 0.24 |
| SURFYNOL™ CT-136 | | 0.19 | 0.19 | 0.19 | 0.19 |
| ANTAROL TS 709 | | 0.37 | 0.37 | 0.37 | 0.37 |
| Water | | 1.00 | 1.00 | 2.00 | 2.00 |
| Titanium dioxide pigment | | 6.75 | 6.75 | 3.36 | 3.36 |
| Calcium carbonate | | 59.63 | 59.63 | 64.36 | 64.36 |
| **Mix for 15 minutes, then add** | | | | | |
| **Methanol** | | 2.03 | 2.03 | 2.01 | 2.01 |
| 2,2,4-trimethyl-1,3-pentanediol monoisobutyrate | | 1.22 | 1.22 | 1.09 | 1.09 |

(continued)

| Component (down) | EXAMPLE (across) | C (g) Comparative | 3 (g) | D (g) Comparative | 4 (g) |
|---|---|---|---|---|---|
| **Mix for 5 minutes, then add** | | | | | |
| 2-hydroxyethyl cellulose aqueous solution | | 1.32 | 0.94 | 1.61 | 1.30 |
| **Water** | | 2.58 | 1.56 | 2.86 | 1.92 |
| Total weight (g) | | 100.00 | 100.00 | 100.00 | 100.00 |
| **PAINT PROPERTIES** | | | | | |
| **Filler / binder solids ratio** | | 83 / 17 | 83 / 17 | 85.5 / 14.5 | 85.5 / 14.5 |
| **% PVC** | | 69 % | 69 % | 72 % | 72 % |
| **Weight average particle size** | | 180 nm | 128 nm | 180 nm | 128 nm |
| **Storage Stability (KU): 1 day / 60 days each @ 25 °C** | | 91 / 88 | 89 / 90 | 90 / 88 | 96 / 96 |
| **No Pick-up Dry Time, Method A** | | 23 minutes | 11 minutes | 62 minutes | 15 minutes |

As shown in Table 3, above, the inventive fast dry binder compositions of Examples 3 and 4 with a 128 nm weight average particle size emulsion polymer dry considerably faster than the respective compositions of Comparatives C and D made at the same PVC and from substantially the same anionically stabilized emulsion polymer, and the same polyfunctional amine, and filler, but with a 180 nm weight average particle size emulsion polymer binder. In addition, stability remained good in Examples 3 and 4 as the PVC is increased.

TABLE 4: 75% PVC (High PVC) Binder Formulations

| Component (down) | EXAMPLE (across) | E (g) Comparative | 5 (g) |
|---|---|---|---|
| Fast-dry acrylic emulsion binder | | 19.26 | -- |
| High Efficiency Binder Composition A | | -- | 20.36 |
| Acrylic Dispersant | | 0.24 | 0.24 |
| SURFYNOL™ CT-136 | | 0.19 | 0.19 |
| ANTAROL TS 709 | | 0.36 | 0.36 |
| Water | | 3.52 | 3.52 |
| Titanium dioxide pigment | | 3.30 | 3.30 |
| Calcium carbonate | | 66.08 | 66.08 |
| **Mix for 15 minutes, then add** | | | |
| Methanol | | 1.98 | 1.98 |
| 2,2,4-trimethyl-1,3-pentanediol monoisobutyrate | | 0.96 | 0.96 |
| **Mix for 5 minutes, then add** | | | |
| 2-hydroxyethyl cellulose aqueous solution | | 1.27 | 1.08 |
| **Water** | | 2.84 | 1.93 |
| Total weight (g) | | 100.00 | 100.00 |
| **PAINT PROPERTIES** | | | |
| **Filler / binder solids ratio** | | 87.3 / 12.7 | 87.3 / 12.7 |
| **% PVC** | | 75 % | 75 % |
| **Weight average particle size** | | 180 nm | 128 nm |
| **Storage Stability (KU): 1 day / 60 days each @ 25 °C** | | 89 / 87 | 93 / 92 |

(continued)

| Component (down) | EXAMPLE (across) | E (g) Comparative | 5 (g) |
|---|---|---|---|
| No Pick-up Dry Time. Method A | | 69 minutes | 19 minutes |

As shown in Table 4, above, the inventive fast dry binder composition of Example 5 with a 128 nm weight average particle size emulsion polymer dries more than three times as fast as the respective composition of Comparative E made at the same PVC and from substantially the same anionically stabilized emulsion polymer, and the same polyfunctional amine, and filler, but with a 180 nm weight average particle size emulsion polymer binder. In addition, stability remained good in Example 5 even though PVC is increased to 75.

TABLE 5: Effect of Particle Size Variation in 72% PVC Formulations

| EXAMPLE Component | F (g) comparative | 6 (g) | 7 (g) | 8 (g) | 9 (g) | 10 (g) | 11 (g) | 12 (g) |
|---|---|---|---|---|---|---|---|---|
| [1]Emulsion $X_w$ | 200 nm | 164 nm | 148 nm | 138 nm | 129 nm | 128 nm | 127 nm | 108 nm |
| High Efficiency Binder No. | A | 2 | 3 | 4 | 5 | 6 | 7 | 8 |
| Binder total | 326.4 | 340.4 | 340.4 | 330.2 | 342.8 | 345.8 | 341.4 | 340.0 |
| Water | 72.8 | 51.8 | 51.8 | 62.0 | 49.4 | 46.4 | 50.8 | 59.2 |
| Acrylic Dispersant | 3.6 | 3.6 | 3.6 | 3.6 | 3.6 | 3.6 | 3.6 | 3.6 |
| SURFYNOL™ CT-136 | 2.8 | 2.8 | 2.8 | 2.8 | 2.8 | 2.8 | 2.8 | 2.8 |
| DREWPLUS™ L-493 | 5.5 | 5.5 | 5.5 | 5.5 | 5.5 | 5.5 | 5.5 | 5.5 |
| $TiO_2$ pigment | 50.0 | 50.0 | 50.0 | 50.0 | 50.0 | 50.0 | 50.0 | 50.0 |
| Calcium carbonate | 958.3 | 958.3 | 958.3 | 958.3 | 958.3 | 958.3 | 958.3 | 958.3 |
| **Mix 15 min, then add** | | | | | | | | |
| Methanol | 30.0 | 30.0 | 30.0 | 30.0 | 30.0 | 30.0 | 30.0 | 30.0 |
| 2,2,4 TMPMI | 16.3 | 16.3 | 16.3 | 16.3 | 16.3 | 16.3 | 16.3 | 16.3 |
| **Mix 5 min, then adjust viscosity with:** | | | | | | | | |
| 2-hydroxyethyl cellulose aq sol and water | 22.5 | 22.5 | 22.5 | 22.5 | 22.5 | 22.5 | 22.5 | 22.5 |
| Total weight (g) | 1488.2 | 1488.2 | 1488.2 | 1488.2 | 1488.2 | 1488.2 | 1488.2 | 1488.2 |
| **PAINT PROPERTIES** | | | | | | | | |
| **Filler/ binder solids ratio** | 85.5 / 14.5 | 85.5 / 14.5 | 85.5 / 14.5 | 85.5 / 14.5 | 85.5 / 14.5 | 85.5 / 14.5 | 85.5 / 14.5 | 85.5 / 14.5 |
| **% PVC** | 72 % | 72 % | 72 % | 72 % | 72 % | 72 % | 72 % | 72% |
| **Storage Stability (KU): 1 day @ 25°C /10 days @ 60 °C** | 83.0 / 85.6 | 84.4 / 89.7 | 83.3 / 87.9 | 81.3 / 84.7 | 85.1 / 92.7 | 84.0 / 88.2 | 85.6 / 90.3 | 82.3 / 90.7 |

(continued)

| EXAMPLE Component | F (g) comparative | 6 (g) | 7 (g) | 8 (g) | 9 (g) | 10 (g) | 11 (g) | 12 (g) |
|---|---|---|---|---|---|---|---|---|
| No Pickup Dry Time, Method B | 36 min | 12 min | 12 min | 12 min | 16 min | 16 min | 16 min | 8 min |
| 1. weight average particle size. | | | | | | | | |

As shown in Table 5, above, the dry time decreases with particle size in all Examples, especially in comparison to Example F (200 nm weight average particle size). Stability is still acceptable at a 108 nm weight average particle size in Example 12.

TABLE 6: Effect of Particle Size Variation in 66% PVC Formulations

| EXAMPLE Component | H (g) comparative | 13 (g) | 14 (g) | 15 (g) | 16 (g) | 17 (g) | 18 (g) | 19 (g) |
|---|---|---|---|---|---|---|---|---|
| Emulsion $X_w$ | 200 nm | 164 nm | 148 nm | 138 nm | 129 nm | 128 nm | 127 nm | 108nm |
| HEB | A | 2 | 3 | 4 | 5 | 6 | 7 | 8 |
| HEB total | 396.8 | 413.8 | 413.8 | 401.4 | 416.8 | 420.3 | 415.1 | 413.3 |
| Water | 31.5 | 14.5 | 14.5 | 26.9 | 11.5 | 8.0 | 13.2 | 15.0 |
| Acrylic Dispersant | 7.2 | 7.2 | 7.2 | 7.2 | 7.2 | 7.2 | 7.2 | 7.2 |
| SURFYNOL ™ CT-136 | 2.8 | 2.8 | 2.8 | 2.8 | 2.8 | 2.8 | 2.8 | 2.8 |
| DREWPLUS ™ L-493 | 5.5 | 5.5 | 5.5 | 5.5 | 5.5 | 5.5 | 5.5 | 5.5 |
| $TiO_2$ pigment | 100.0 | 100.0 | 100.0 | 100.0 | 100.0 | 100.0 | 100.0 | 100.0 |
| Calcium carbonate | 841.7 | 841.7 | 841.7 | 841.7 | 841.7 | 841.7 | 841.7 | 841.7 |
| Mix 15 min, then add | | | | | | | | |
| Methanol | 30.0 | 30.0 | 30.0 | 30.0 | 30.0 | 30.0 | 30.0 | 30.0 |
| 2,2,4 TMPMI | 19.8 | 19.8 | 19.8 | 19.8 | 19.8 | 19.8 | 19.8 | 19.8 |
| Mix 5 min, then adjust viscosity with: | | | | | | | | |
| 2-hydroxyethyl cellulose aq sol and water | 21.6 | 21.6 | 21.6 | 21.6 | 21.6 | 21.6 | 21.6 | 21.6 |
| Total weight (g) | 1457.0 | 1457.0 | 1457.0 | 1457.0 | 1457.0 | 1457.0 | 1457.0 | 1457.0 |
| PAINT PROPERTIES | | | | | | | | |
| Filler/ binder solids ratio | 80.9 / 19.1 | 80.9 / 19.1 | 80.9 / 19.1 | 80.9 / 19.1 | 80.9 / 19.1 | 80.9 / 19.1 | 80.9 / 19.1 | 80.9 / 19.1 |

(continued)

| EXAMPLE Component | H (g) comparative | 13 (g) | 14 (g) | 15 (g) | 16 (g) | 17 (g) | 18 (g) | 19 (g) |
|---|---|---|---|---|---|---|---|---|
| % PVC | 66 % | 66 % | 66% | 66 % | 66% | 66 % | 66% | 66 % |
| Storage Stability day @ (KU): 1 day @ 25°C /10 days @ 60 °C | 84.5/ 92.0 | 85.9 / 95.3 | 85.4 / 98.4 | 86.7 / 94.1 | 88.0 / 100.3 | 86.4 / 95.3 | 86.3 / 93.8 | 87.8 / 99.0 |
| No Pickup Dry Time Method B | 16 min | 8 min | 8 min | 8 min | 8 min | 8 min | 8 min | 8 min |
| 1. weight average particle size. | | | | | | | | |

As shown in Table 6, above, the dry time decreases with particle size in all Examples, especially in comparison to Example F (200 nm weight average particle size). Stability at 66% PVC is unacceptable at a 108 nm weight average particle size in Example 19 but is acceptable in Examples 15, 16 and 17 at similar weight average particle sizes. As not all inventive paints pass the heat stability test, 66% PVC is not in the most preferred PVC range.

TABLE 7: Durability of Binder Formulations

| Component (down) | EXAMPLE (across) | J (g) Comparative | K (g) Comparative | 20 (g) |
|---|---|---|---|---|
| Fast-dry acrylic emulsion binder | | 2300.5 | 1440.0 | -- |
| High Efficiency Binder 9 | | -- | -- | 1420.8 |
| Water | | 0.0 | 483.3 | 483.3 |
| Poly(oxazolidinylethyl methacrylate) | | -- | -- | 33.6 |
| Acrylic Dispersant | | 36.0 | 36.0 | 36.0 |
| SURFYNOL™ CT-136 | | 14.0 | 14.0 | 14.0 |
| DREWPLUS™ L-493 | | 10.0 | 27.5 | 27.5 |
| Titanium dioxide pigment | | 500.0 | 500.0 | 500.0 |
| Calcium carbonate ([2]5.5 $\mu$m) | | 3803.0 | 4825.0 | 4825.0 |
| Mix for 15 minutes, then add | | | | |
| Water | | 25.0 | 0.0 | 0.0 |
| Methanol | | 150.0 | 150.0 | 150.0 |
| 2,2,4-trimethyl-1,3-pentanediol monoisobutyrate | | 115.0 | 72.0 | 71.0 |
| DREWPLUS™ L-493 | | 17.5 | 0.0 | 0.0 |
| Mix for 5 minutes, then add | | | | |
| 2-hydroxyethyl cellulose aqueous solution | | 58.2 | 80.8 | 75.0 |
| Water | | 18.3 | 8.6 | 0.0 |
| Total weight (g) | | 7047.5 | 7637.2 | 7636.2 |
| PAINT PROPERTIES | | | | |
| Filler / binder solids ratio | | 76.8/23.2 | 87 / 13 | 87 / 13 |

(continued)

| Component (down) | EXAMPLE (across) | J (g) Comparative | K (g) Comparative | 20 (g) |
|---|---|---|---|---|
| % PVC | | 60 % | 75 % | 75 % |
| Weight average particle size | | 180 nm | 180 nm | 127 nm |
| Storage Stability (KU):1 day / 10 days each @ 60 °C | | 86.0 / 94.8 | 82.0/80.6 | 83.8 / 94.4 |
| Retroreflectance (millicandelas per sq m per lux) | | | | |
| 1 month | | 490.0 | 486.5 | 507.0 |
| 17 months | | 106.5 | 73.5 | 113.5 |
| 1. Mean particle size | | | | |

Table 7, above, shows that after 17 months on the road small particle size binders, as in Example 20, provide slightly improved durability when compared to large particle size binders, as in Comparatives J and K, even though Example 20 has a high %PVC of 75 and Comparative J has significantly more binder than Example 20.

**Claims**

1. A fast dry binder composition comprising: one or more anionically stabilized emulsion polymer having a weight average particle size of from 100 nanometers (nm) to 165 nm, one or more polyamine polymer, one or more volatile base and one or more filler, extender and/or pigment, wherein the compositions have a percent pigment volume concentration (%PVC) of from 63 to 80.

2. The binder composition as claimed in claim 1, wherein the fast dry binder composition has a %PVC of 65 or higher.

3. The binder composition as claimed in claim 1 which is an above critical PVC (cPVC) binder composition.

4. The binder composition as claimed in claim 1, wherein the anionically stabilized emulsion polymer has a weight average particle size of 110 nm or higher

5. The binder composition as claimed in claim 4, wherein the anionically stabilized emulsion polymer has a weight average particle size of 160nm or lower.

6. The binder composition as claimed in claim 1, wherein the one or more pigment, filler or extender is chosen from an extender, combinations thereof, and any combination thereof with a pigment.

7. A method of making a coated substrate comprising: applying the fast dry binder composition as claimed in claim 1 to a road, paved or concrete surface, or to a building surface, and allowing it to dry.

8. A coated substrate made from the fast dry binder composition as claimed in claim 1.

9. The coated substrate as claimed in claim 8, which is a traffic marking.


**Patentansprüche**

1. Schnelltrocknende Binderzusammensetzung, umfassend: ein oder mehrere anionisch stabilisierte Emulsionspolymere, die eine gewichtsgemittelte Teilchengröße von 100 Nanometern (nm) bis 165 nm aufweisen, ein oder mehrere Polyamin-Polymere, eine oder mehrere flüchtige Basen und einen oder mehrere Füllstoffe, Streckmittel und/oder Pigmente, wobei die Zusammensetzungen eine prozentuale Pigment-Volumen-Konzentration (%PVK) von 63 bis 80 aufweisen.

2. Binderzusammensetzung nach Anspruch 1, wobei die schnelltrocknende Binderzusammensetzung eine %PVK von 65 oder mehr aufweist.

3. Binderzusammensetzung nach Anspruch 1, die eine überkritische PVK (kPVK) Binderzusammensetzung ist.

4. Binderzusammensetzung nach Anspruch 1, wobei das anionisch stabilisierte Emulsionspolymer eine gewichtsgemittelte Teilchengröße von 110 nm oder mehr aufweist.

5. Binderzusammensetzung nach Anspruch 4, wobei das anionisch stabilisierte Emulsionspolymer eine gewichtsgemittelte Teilchengröße von 160 nm oder weniger aufweist.

6. Binderzusammensetzung nach Anspruch 1, wobei der/das eine oder die mehreren Pigmente, Füllstoffe oder Streckmittel ausgewählt sind aus einem Streckmittel, Kombinationen davon und jeglicher Kombination davon mit einem Pigment.

7. Verfahren zur Herstellung eines beschichteten Substrats, umfassend: das Aufbringen der schnelltrocknenden Binderzusammensetzung nach Anspruch 1 auf eine Straßen-, Pflaster- oder Betonoberfläche oder auf eine Gebäudeoberfläche und das Trocknenlassen.

8. Beschichtetes Substrat, hergestellt aus der schnelltrocknenden Binderzusammensetzung nach Anspruch 1.

9. Beschichtetes Substrat nach Anspruch 8, das eine Straßenmarkierung ist.


**Revendications**

1. Composition liante à séchage rapide comprenant : un ou plusieurs polymères en émulsion stabilisés anioniquement ayant une taille de particule moyenne en poids de 100 nanomètres (nm) à 165 nm, un ou plusieurs polymères polyamines, une ou plusieurs bases volatiles et une ou plusieurs charges, extendeurs et/ou pigments, où les compositions ont une concentration volumique de pigment en pourcentage (%PVC) de 63 à 80.

2. Composition liante selon la revendication 1, où la composition liante à séchage rapide a une %PVC de 65 ou plus.

3. Composition liante selon la revendication 1 qui est une composition liante au-delà de la PVC critique (cPVC).

4. Composition liante selon la revendication 1, où le polymère en émulsion stabilisé anioniquement a une taille de particule moyenne en poids de 110 nm ou plus.

5. Composition liante selon la revendication 4, où le polymère en émulsion stabilisé anioniquement a une taille de particule moyenne en poids de 160 nm ou moins.

6. Composition liante selon la revendication 1, où le un ou plusieurs pigment, charge ou extendeur est choisi parmi un extendeur, leurs combinaisons, et toute combinaison de ceux-ci avec un pigment.

7. Procédé de production d'un substrat revêtu comprenant : l'application de la composition liante à séchage rapide selon la revendication 1 à une route, une surface pavée ou en béton, ou à une surface de construction, et le fait de l'amener à sécher.

8. Substrat revêtu produit à partir de la composition liante à séchage rapide selon la revendication 1.

9. Substrat revêtu selon la revendication 8, qui est un marquage routier.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070148357 A, Joecken
- US 5804627 A
- US 4325856 A
- US 4654397 A
- US 4814373 A
- US 4119600 A
- US 5672379 A
- US 5939514 A

### Non-patent literature cited in the description

- **T. G. Fox.** *Bull. Am. Physics Soc.,* 1956, vol. 1 (3), 123